# EUROPEAN PATENT SPECIFICATION

(11) **EP 2 156 525 B1**
(45) Date of publication and mention of the grant of the patent: **08.06.2016**
(21) Application number: 08737179.5
(22) Date of filing: 11.04.2008
(51) Int. Cl.: H01R 13/703

(54) **ELECTRICAL SUPPLY DEVICES**
ELEKTRISCHE VERSORGUNGSEINRICHTUNG
DISPOSITIFS D'ALIMENTATION ÉLECTRIQUE

(30) Priority: 04.05.2007 GB 0708708; 19.09.2007 GB 0718224
(43) Date of publication of application: 24.02.2010
(73) Proprietor: Ecotouch Limited, MC98002 Monaco (MC)
(72) Inventor: Huxlex, Martin, St Johns IM4 3AL (IM); Wondergem, Tana Leonardus, Lonan IM47JY (IM)
(74) Representative: ip21 Ltd
(86) International application number: PCT/GB2008/050254
(87) International publication number: WO 2008/135776

(56) References cited:
- WO-A-92/01968
- WO-A-02/063916
- FR-A- 2 653 944
- GB-A- 2 300 943
- GB-A- 2 336 962
- GB-A- 2 382 239
- GB-A- 2 402 811
- JP-A- 7 288 883
- US-A- 3 971 028

## Description

### Field of the Invention

The invention relates to electrical supply devices - outlet sockets and associated switches - for improved energy efficiency, and especially for use in a domestic environment.

### Background and Prior Art Known to the Applicant

With the increasing number of electrical devices in use in the home today, more electrical power is being consumed, even when the equipment is not in use, by the use of "Standby Mode", in which power is removed from the main circuitry but retained to sensing and other circuits to allow the equipment to be switched on remotely by a user. Such systems are common in e.g. televisions, video recorders, personal computers, DVD players and other audio equipment. Many other so-called "white goods" such as dishwashers, washing machines, tumble dryers, and digital microwaves also incorporate these features. With the increase use of mobile devices such as mobile telephones, MP3 players and the like, consumers often have a multitude of chargers for recharging their batteries. These devices also consume power when plugged in to a mains supply, even though the device they are designed to charge is not connected. All of these devices result in the use of electricity for little or no gain. In order to stop this loss, the consumer has to individually switch off or unplug each device manually. Traditionally, mains electricity supplying outlet socket panels are located low down on the internal walls of buildings and often behind the equipment they supply, sometimes proving difficult to access. Previous mobile devices to switch off equipment using "Standby Mode" have been explored, for example Patent application numbers GB2407713, GB2385449 and WO0152590, unfortunately all of these have three disadvantages that the present invention solves. Firstly the said mobile devices will eventually need their batteries replaced or recharged. Secondly the consumer still has to locate the said remote control and then physically visit the receiver part of the device wherever it is located, (if it is located elsewhere in a different room for instance). Thirdly these devices can be mislaid or even stolen. Failure to switch off manually increases energy costs and adds to ecological problems caused by carbon emissions. Furthermore, even if a consumer is willing (in principle) to unplug and switch off devices when leaving a room, or retiring to bed for the night, much effort needs to be employed visiting each outlet switch in turn (which are often located in different rooms), and even the most ecological-minded consumer is prone to forget to switch off the devices.

Other remote switching devices are also known which attempt to provide a solution to some of these problems: Patent applications DE4301799 (Fassbender) discloses a wall-mounted socket with a radio receiver to control its operation, as does JP2109282 (Shiojiri Kogyo) and EP1653572 (Centrlitech). However, all of the devices so described suffer from the same inherent problem: they themselves consume power when not in use. DE20311300 (Gink) and US5455464 (Firstperson) also describe systems to control power sockets wirelessly, but again, they consume power when not in use. Additionally, FR2653944 discloses a safety plug to prevent a child, for example, electrocuting itself. GB2336962 discloses a battery-powered hand-held infrared remote control device to operate the on-off state of a light bulb.

### Summary of the Invention

Accordingly, the invention provides, in a first independent aspect, a mains electrical supply outlet comprising: signal-receiving means to receive an encoded wireless signal; a socket, connectable, in use, to an electricity-consuming device, to supply mains electricity hereto; a controller, powered by mains electricity, to decode said received encoded signal and, in response to said signal, to control switching of electrical power to said socket; and a connection sensor, to sense the connection of an electricity-consuming device to said socket and to disconnect power from said controller in the absence of such a connection.

In particularly preferred embodiments, the mains electrical supply outlet is a wall-mountable socket. The use of such technology in a wall-mounted context is particularly advantageous, as it is these type of sockets that are usually particularly difficult to reach (often located behind electrical equipment, or behind cupboards etc.).

A range of encoded wireless signals may be employed, for example ultrasonic or other sound waves, infra-red signals or the like. In particularly preferred embodiments, however, a radio signal is employed, as this does not require a "line of sight" between a transmitter and the signal-receiving means of the supply socket.

The signal is "encoded", i.e. a particular form of signal is representative of an action to be taken by the supply socket. The action may be to remove power from the system, or to return power. In particularly preferred embodiments to be described below, the encoding may also be such as to link a particular outlet socket (or a collection of such sockets) to a particular signal code.

Preferably, said connection sensor is actuated by a pin of a plug connectable to said socket. In many countries (e.g. in the United Kingdom) electrical plugs have three terminal pins: two to carry the power, and a third pin to provide an earth connection to devices. Many modern double-insulated devices do not require an earth connection, but the earth pin provides another function: to open safety gates on the electrical socket that cover the live electrical supply terminals when no plug is connected. This pin may also be used, therefore to actuate the connection sensor, by use, e.g. of a microswitch, or a metal-sensing proximity sensor.

Preferably also, and in any embodiment of the invention, the supply outlet further comprises a manually-operable switch to disable operation of said controller. There are some electrical devices that a consumer might wish to always be supplied with power, such as fridges and freezers, but also perhaps video recording equipment that needs to be left with power to allow timed recordings to be made. The provision of a manually-operable switch to allow the controller to be disabled allows the installation of such supply outlets at any point in a room and to be retro-actively selectable to be a remotely-controlled outlet or not.

Preferably also, and in any embodiment of the invention, said controller compares said decoded signal to a pre-stored code held within the supply outlet and controls switching of electrical power only a match is found between said decoded signal and said pre-stored code. In this way, individual sockets (or groups of sockets) may be associated with one or more remote signal transmitters. More preferably, the outlet comprises means to change said pre-stored code to match a subsequently received encoded wireless signal. This allows an electrical installation to be reconfigured as changing use demands.

Also included within the scope of the invention is a supply outlet substantially as described herein, with reference to and as illustrated by any appropriate combination of the accompanying drawings.

In a second linked independent aspect, the invention provides an electrical light switch assembly comprising: a manually operable light switch to control the supply of power to a lighting circuit; a manually operable remote power switch to actuate the transmission of an encoded wireless signal to a mains electrical supply outlet as described herein.

Similarly, the invention provides an electrical transmission assembly comprising: a plug suitable for receiving mains electricity; a socket suitable for conveying mains electricity received by the plug; and a manually operable remote power switch to actuate the transmission of an encoded wireless signal to a mains electrical supply outlet as described herein.

The invention solves the problem of consumers forgetting to remove power from the outlet sockets by co-locating the remote power switch with a conventional light switch (either a standard on-off switch or a light dimmer switch). Thus, when consumers leave a room, they are already habituated to switching off the lights, and are presented with the power-disable switch in the same location. There are a number of further advantages that flow from this configuration: As such light switches are almost invariably wall-mounted, the remote power switch is in a fixed location, and cannot be inadvertently lost. The switch is already provided with mains power, that can be used to power to switching and signal transmission needs of the remote switch.

Also, electrical cabling plus switch mounting back boxes already in place in homes may be used to house these improved electrical light switch, and mains electrical supply outlet assemblies thereby allowing them to be retro-fitted in existing installations so that existing homes, as well as new-build homes may benefit from the energy savings resulting from the system.

Preferably also and in any embodiment of the invention, the electrical light switch assembly or electrical transmission assembly further comprises a sound generator to give an audible indication of the transmission of said encoded wireless signal. Such an audio tone not only gives a user confirmation that power is connected or disconnected from the chosen electrical sockets, but is of particular use for blind people who would not otherwise be able to tell that the system is operating correctly.

Preferably also and in any embodiment of the invention, the electrical light switch assembly or electrical transmission assembly further comprises a visual indicator give a visible indication of the transmission of said encoded wireless signal.

Also included within the scope of the invention is an electrical light switch assembly substantially as described herein, with reference to and as illustrated by any appropriate combination of the accompanying drawings. The scope of the invention further includes an electrical transmission assembly substantially as described herein, with reference to and as illustrated by any appropriate combination of the accompanying drawings.

### Brief Description of the Drawings

The invention will be described with reference to the accompanying drawings, in which:
Figure 1a illustrates a standard one-way electrical light switch control panel with a separate additional switch for control of remote sockets;
Figure 1b illustrates a standard dimmer electrical light switch control panel with a separate additional switch for control of remote sockets;
Figure 2a illustrates a standard mains electricity supplying single outlet socket with a separate additional switche to override the remote capability and enter a "teaming mode";
Figure 2b illustrates a standard mains electricity supplying double outlet socket with separate additional switches as above;
Figure 3 illustrates a typical domestic room layout with installed switchgear;
Figure 4 is a block diagram of an embodiment of the electrical circuitry in the wall mounted electrical light switch control panel with a separate additional switch;
Figure 5 is a block diagram of an embodiment of electrical circuitry in the mains electricity supplying outlet socket/s with other additional switches;
Figure 6 illustrates front and rear views of an external mains electricity supplying single plug adapter with a separate additional switch, as above;
Figure 7 illustrates an external four-way trailing cable mains electricity supplying plug adapter with other additional switches, as above;
Figure 8 illustrates a further schematic diagram of the operation of an embodiment of an electrical outlet socket according to the invention; and
Figure 9 illustrates an electrical transmission assembly in the form of an extension lead with an separate additional switch for control of remote sockets.

### Description of Preferred Embodiments

In overview, and without limitation to scope of the invention described in the claims that follow, the invention provides a wall-mounted electrical light switch control panel with a separate additional switch that controls a number of wall-mounted electronic circuitry modified mains electricity supplying outlet socket panels. The said additional switch uses wireless technology to overcome the problem of accessing hard to reach mains electricity supplying outlet socket panels. The present invention will offer the consumer on/off control over a number of electronic circuitry modified mains electricity supplying outlet socket panels with the touch of the separate additional switch on the wall mounted electrical light switch control panel, without having to physically visit each individual mains electricity supplying outlet socket panel. Either part of the present invention only uses a minute amount of electrical power when in use, and none when not. Neither part of the present invention (the socket panel or the light switch panel) use batteries that have to be replaced or recharged. Both parts of the present invention are fixed to walls, so they cannot be mislaid. As is the case with traditionally mains electricity supplying outlet socket panels being sometimes difficult to access, the exact opposite can be said about the controlling part of the present invention. Usually wall mounted electrical light switch control panels are located in easily accessible places near entrances or exits of rooms, and therefore giving the consumer complete control on entry or when leaving the room or dwelling. Typically the time when the consumer is most likely to leave electronic equipment in "Standby Mode" is overnight while they sleep; therefore the present invention allows the consumer to "switch off" these devices at the same time when they perform the last task at night of switching off the lights.

The wall mounted electrical light switch control panel with a separate additional switch part of the present invention can operate a multitude of wall mounted electronic circuitry modified mains electricity supplying outlet socket panels part of the present invention in the same or in different rooms, and can be installed wherever the consumer favours.

Conversely, the wall-mounted electronic circuitry modified mains electricity supplying outlet socket panel part of the present invention can learn and be controlled by a multitude of wall mounted electrical light switch control panels part of the present invention.

The wall-mounted electronic circuitry modified mains electricity supplying outlet socket panel part of the present invention can be electrically disabled if required by a small switch on the bottom of each socket panel. When the switch is set to the disable position then no electrical power will be used by the electronic circuitry of the socket panel. The socket panel will however still supply mains electricity. When the switch is set to the enable position then the electronic circuitry of the socket panel will only use electrical power if there is an electrical plug inserted in to the socket panel.

For wall-mounted electronic circuitry modified mains electricity supplying double or more outlet socket panel versions of the present invention actual electricity outlet points can individually be disabled if required by a small switch on the bottom of each socket panel. Therefore allowing as many of the electricity outlet points on the socket panel to be controlled manually from the socket panel or from the wall mounted electrical light switch control panel with a separate additional switch of the present invention as required.

The wall mounted electronic circuitry modified mains electricity supplying outlet socket panels of the present invention can also come in other forms such as an external electronic circuitry modified mains electricity supplying plug adapters with and without a trailing cable.

If installed and used, the present invention can save the consumer money on their energy bill, but more importantly can reduce the amounts of energy used and wasted causing ecological problems on our planet. The consumer saves money and we all feel the difference.

The present invention consists of two parts: A mains electrical supply outlet and an electrical light switch assembly. Embodiments of each of these two parts are now described with reference to the accompanying drawings.

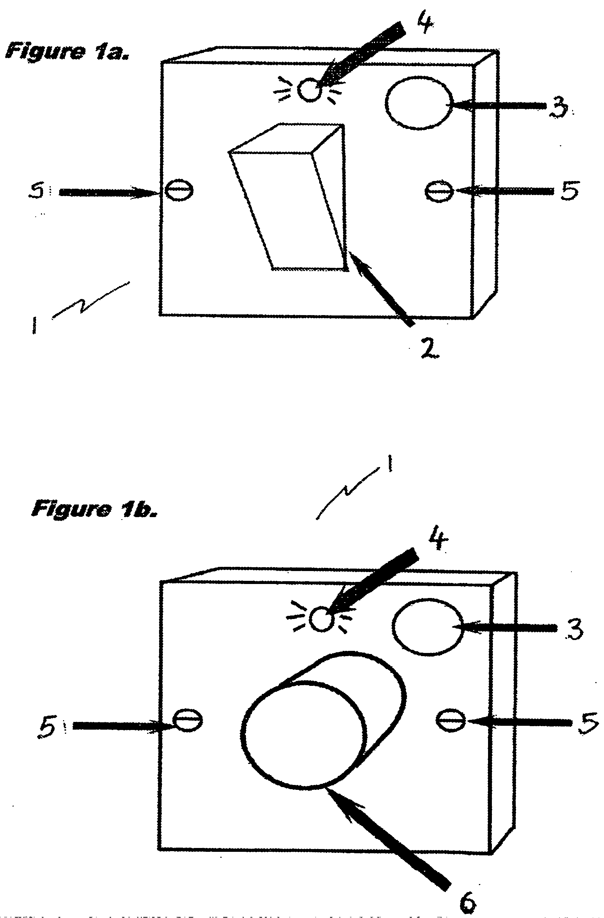

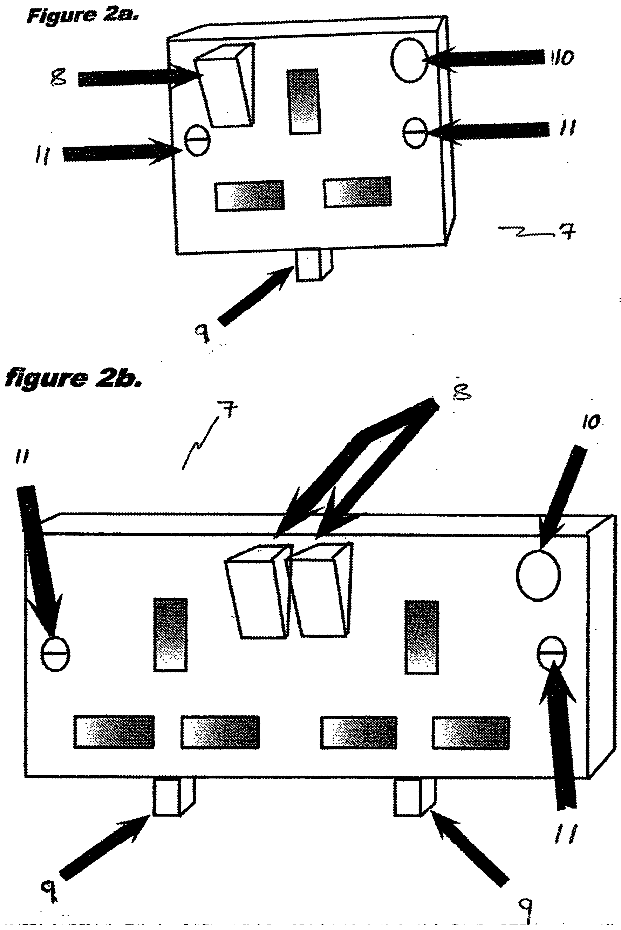

Embodiments of electrical light switch assemblies according to the invention are illustrated in Figures 1a and 1b. Figure 1a shows a light switch assembly, generally indicated by 1, having a standard panel on-off switch, 2, a remote power switch 3 and a visual indicator 4, in the form of a light-emitting diode (LED). The switch assembly is attachable to a standard electrical back box by means of fixing screws 5. The embodiment in figure 2b illustrates a similar switch, but incorporating a dimmer control 6.

An embodiment of a wall-mounted electronic circuitry modified mains electricity supplying outlet socket panel (the mains electrical supply outlet), is shown in Figure 2a and 2b and generally indicated by 7, and illustrates a standard socket on-off switch 8, an override (or disable) switch 9, and a switch to configure the socket into "learn mode" 10. Either panel may be attached to a standard electrical back box by means of fixing screws 11.

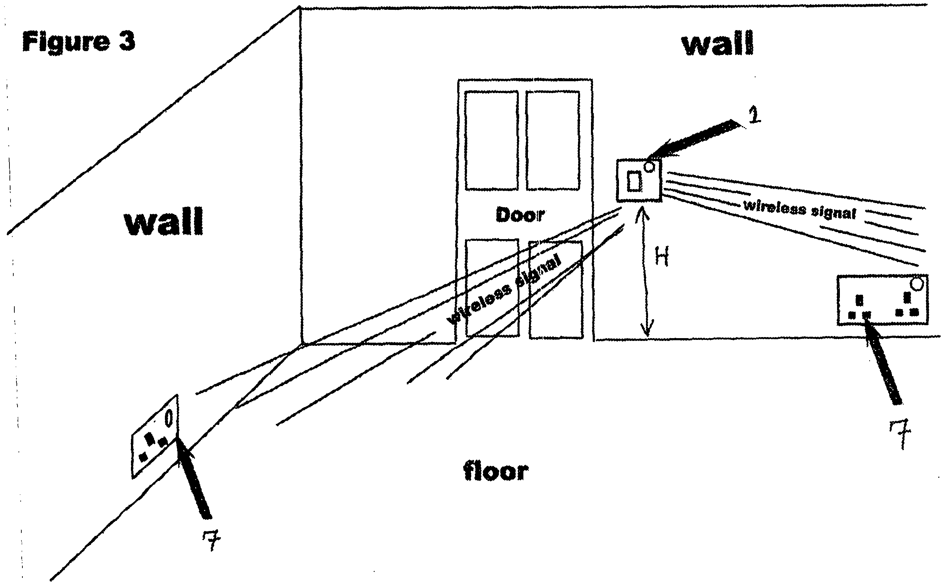

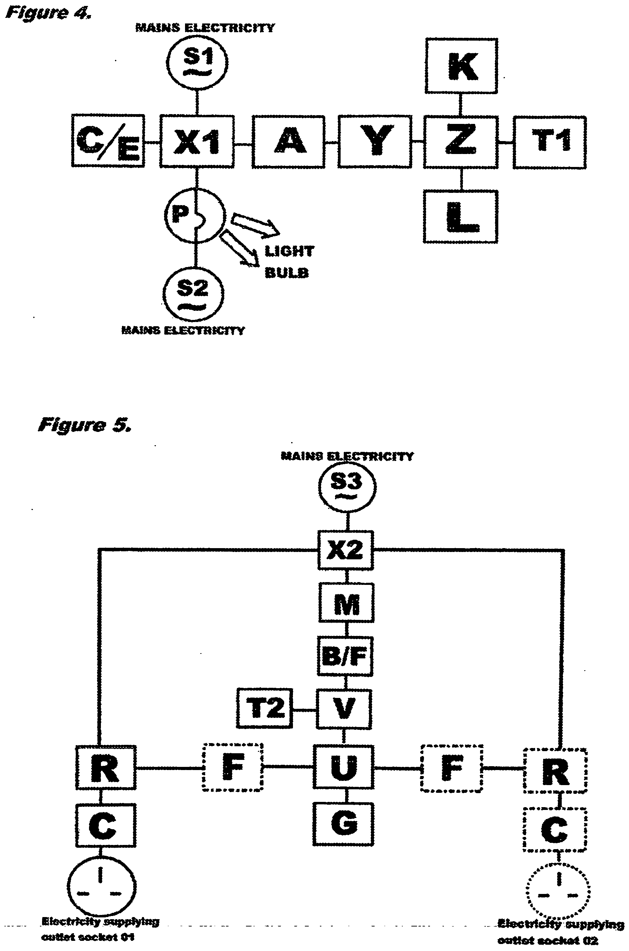

To help describe the operation of the first part of the present invention, Figure 4 shows the basic block diagram of how the internal circuitry of the electrical light switch panel (the electrical light switch assembly) connects to the mains electricity and the common light bulb. The assembly is permanently attached between the mains electricity, S1, and the electrical light bulb, P, at the usual position on the walls in the rooms of the property, (the usual position for example being between 1 metre to 1.5 metres from the floor, as shown at by height H in Figure 3).

The electrical light bulb, P, is then connected back to the mains electricity, S2, to complete the electrical connection. The mains electricity, S1, and the electrical light bulb, P, are both connected to the interface, X1, of the present invention. The interface, X1, connects to the normal light switch, C, (dimmer knob or touch plate, E, if used instead), so it may operate the electrical light bulb, P, in the normal on or off way. The interface, X1, also connects to said separate additional power switch, A. When the separate additional switch, A, is depressed in the closed/on position, electrical power is only then connected to the electronic circuitry, Y, Z, T1, K, and L. If the separate additional power switch, A, is not depressed in the open/off position, then no electrical power is used by the connecting circuitry, Y, Z, T1, K, or L. The separate additional power switch, A, is also connected to the encoder circuitry, Y. When electrical power is connected to the encoder circuitry, Y, it produces one unique encoded electrical signal to the connected transmitter circuitry, Z. The unique encoded electrical signal is always the same, but may be different between the encoder circuitry of each the different wall mounted electrical light switch control panels with a separate additional switch. The transmitter circuitry, Z, then converts the encoded electrical signal to an electrical broadcast-able signal, which is then transmitted through the connecting antenna, T1. The produced encoded transmitted signal from the antenna, T1, would in the United Kingdom at least, be within the license-free radio frequency transmitting range of 418MHz or 433MHz frequency range. The frequency range however could be adjusted to any that was necessary in order make the present invention legal in the country that it was used.

The transmitter circuitry, Z, is also connected to a Light Emitting Diode (L.E.D.), L, and a loudspeaker, K. The L.E.D., L, is mounted on the front face of the electrical light panel, as shown in Figure 1a and 1b and indicated as 4, to provide a visible indication of said signal being transmitted. The loudspeaker (or other tone generator) is internal to the electrical light panel, and provides an audible indication of said signal being transmitted.

To help describe the operation of the second part of the present invention, Figure 5 shows the basic block diagram of how the internal circuitry of the outlet socket panel connects to the mains electricity. The mains electricity is connected to the wall mounted electronic circuitry modified mains electricity supplying outlet socket panel at the interface, X2, of the present invention. The interface, X2, is connected to the socket panel's mechanical switch, M, and to the number of relays, R, contained internally to the socket panel. The number of relays, R, being one for each socket panel outlet. The mechanical switch is controlled by the same mechanism for controlling the safety flaps which cover the Live and Neutral terminal sockets of a common United Kingdom mains electricity supplying outlet socket. The said mechanism is controlled by the insertion of the Earth terminal of the common mains electricity plug. When the mains electricity plug is inserted in to the socket panel, the mechanical switch, M, will move to the make/on position, and only then allow electrical power to connect to the electrical circuitry, B, F, G, R, T2, U, and V. When no mains electricity plug is inserted in to the socket panel, then the mechanical switch, M, will move to the break/off position, and no electrical power will be used by the electrical circuitry, B, F, G, R, T2, U, and V. For wall-mounted electrical modified electricity supplying single outlet socket panels, as shown in Figure 2a, the interface, X2, is connected to the electrical disable switch, B. For wall mounted electrical modified electricity supplying double or more outlet socket panels, as shown in Figure 2b, the interface, X2, is connected to the over-ride switch, F. Both the electrical disable switch, B, and the over-ride switch, F, control the make/on or break/off electrical power to the connecting circuitry G, R, T2, U, and V. For wall mounted electrical modified electricity supplying double or more outlet socket panels, the over-ride switch, F, also controls the electrical on/off connection from the decoder circuitry, U, to a relay, R. Solid-state relays may be effectively employed, as well as the older electromechanical type. Only when the over-ride switch, F, is in the make/on position will the relay, R, be controlled by the decoder circuitry, U. When the over-ride switch, F, is in break/off position, the relay, R, will continually allow electricity to flow through itself from the mains electricity, S3, to the socket panel switch, C. The socket panel switch, C, then controls the make/on or break/off electrical power to the socket outlets, O1, and for double of more outlet sockets, 02, if there is electrical power being passed through from the relay/s, R. The disable switch, B, or over-ride switch, F, is then connected to the receiver circuitry, V. If the receiver circuitry, V, has electrical power supplied, it will continually monitor the output from the connected antenna, T2. For all received electrical signals transmitted from the first part of the present invention, the receiver circuitry, V, will pass the signal to the connected decoder circuitry, U. On receiving the electrical signal, the decoder circuitry, U, will decode the signal and verify that it correlates with the code that the decoder circuitry, U, has stored electrically. Only if it is the same, the decoder circuitry, U, will toggle its on/off control, (either on to off, or off to on), to the relay/s, R, it is connected to.

The decoder circuitry, U, on control of the relay, R, will break/off the relay's connection between the mains electricity, S3, and the socket panel switch, C, for socket panel outlet O1, and for double of more outlet sockets, the socket panel switch, C, for socket panel outlet 02. The decoder circuitry, U, off control of the relay, R, will make/on the relay's connection between the mains electricity, S3, and the socket panel switch, C, for socket panel outlet O1, and for double of more outlet sockets, the socket panel switch, C, for socket panel outlet 02. The reset/learn switch, G, is mounted on the front face of the socket panel, as shown illustrated 10 in Figure 2a and 2b, and is also connected to the decoder circuitry, U. The reset/learn switch, G, has three functions as will now be described. Firstly, the momentary make/on position of the reset/learn switch, G, will reset the relays, R, to allow connection between the mains electricity, S3, and the socket panel switch, C, for socket panel outlet O1, and for double of more outlet sockets, the socket panel switch, C, for socket panel outlet 02. Secondly, the short make/on position of the reset/learn switch, G, will force the decoder circuitry, U, to learn and store electrically the next received signal code from any of the electrical signals transmitted from the first part of the present invention. Thirdly, the long make/on position of the reset/learn switch, G, will make the decoder circuitry, U, clear any learnt signal codes received. The decoder circuitry, U, will keep any stored signal codes when it has no electrical power attached.

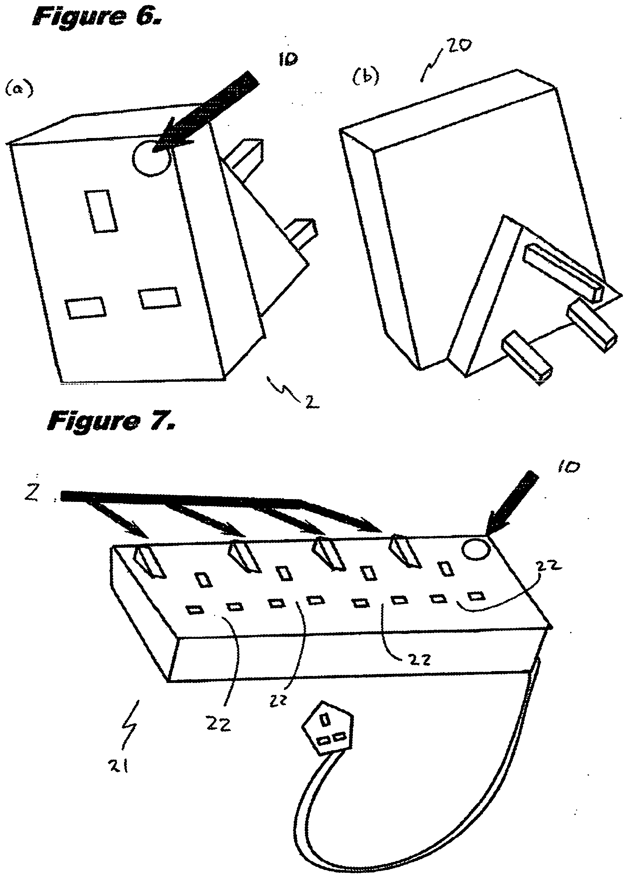

Other external forms of the wall mounted electronic circuitry modified mains electricity supplying outlet socket panel are shown in Figure 6 and 7. Figure 6 illustrates a socket adaptor, generally indicated by 20, figure 6(a) showing a front perspective view, and figure 6(b) showing a rear perspective view. A switch to put the outlet socket into "learn mode" is illustrated as 10. The socket adaptor embodies the control circuitry described herein.

Figure 7 illustrates, again in perspective view, a trailing electrical supply socket, generally indicated by 21, having four outlets 22, each controllable by a standard switch 8; the unit as a whole embodies the control circuitry described herein.

Figure 3 illustrates a typical domestic room layout and shows a single and a double supply outlet 7 according to the present invention, and an electrical switch assembly 1 according the present invention.

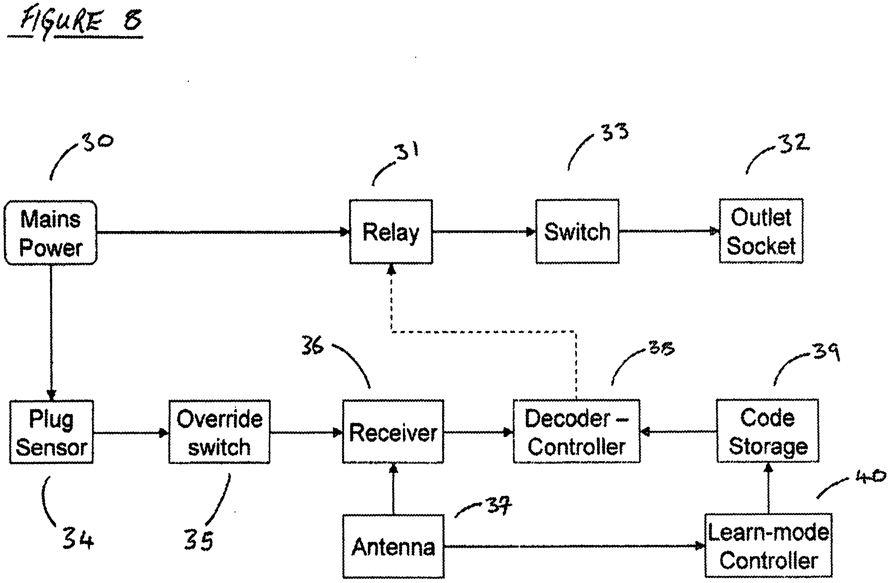

Figure 8 illustrates, schematically, a further embodiment of an electrical outlet according to the present invention. The outlet is supplied with mains power 30 e.g. from a domestic ring main. The power 30 is supplied to a standard socket 32 via a relay 31 and a manually operable switch 33 mounted on the face of the socket. The relay, (e.g. a solid state or electromechanical relay, or other signal-actuatable switch) is in a normally-closed configuration, allowing current to flow to the socket via the switch. Preferred relays are of the type that require no power to maintain the switching in the off or on position, but are responsive to an external electrical control signal. In normal operation, therefore, the socket operates effectively as a normal socket.

A plug sensor 34 is provided, that allows electrical power to be delivered, via an override switch 35 to the remaining circuitry, as indicated. The plug sensor 34 detects the presence of a plug (not illustrated) in the socket 32 either by mechanical actuation by one of the plug's pins, by a portion of the body of the plug, or by a suitable proximity detector such as a metal detector. If a plug is present in the socket, power is passed to an override switch. If a user decides not to use the functionality of the remotely-controllable socket, the override switch can be set to prevent power flowing to the remaining circuitry. When in use, however, power is supplied to the receiver 36, that received wireless signals via an antenna 37. Received signals are sent to the decoder-controller 38 that controls the overall operation of the socket. Upon receipt of coded signals the decoder-controller 38 checks the code is found in the code storage 39, and if found actuates the relay 31 to control flow of power to the outlet socket. Via the decoder-controller 38, a "learn-mode" controller 40 is also provided to accept a new code from the antenna/receiver 36, 37, to allow a new code to be set. The skilled addressee will be able configure such a system using technology available from other fields, for example programmable television remote control units.

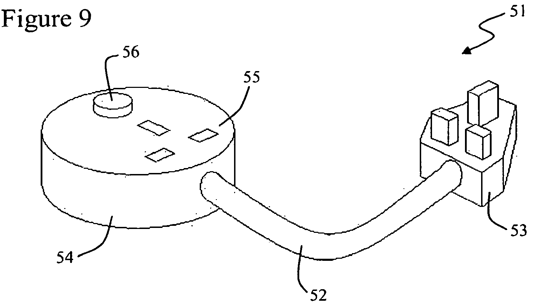

Figure 9 shows an electrical transmission assembly in the form of an extension lead 51 according to the invention. The extension lead 51 comprises a mains electricity cable 52 that connects a three pin mains electricity plug 53 to a plastic box 54 that comprises a mains electricity terminal socket 55. The plastic box 54 further comprises a wireless transmitter operated by a push-button switch 56.

In use, connecting the plug 53 to a mains electricity outlet provides both the socket 55 and the wireless transmitter with power. Operating the remote power switch 56 then causes the wireless transmitter to produce an encoded electrical signal identical to the one produced by the electric light switch 1 described above. Therefore the extension lead 51 is capable of controlling the power sockets 7, 20, 21 described above. By use of control circuitry as described in relation to the electrical light switches, the wireless transmitter in the plastic box 54 only uses electrical power when the push-button switch 56 is pressed.

Therefore, a user can connect, for example, their bed side lamp to a wall socket using the extension lead 51 and be able to switch off any devices connected to suitable sockets, for example halting the power to a TV when it is in standby mode, without leaving their bed.

In order to function properly, the extension lead 51 must be connected to a power socket that is not turned off when the encoded signal is sent. Therefore, if the socket 55 in the plastic box 54 is in use then it must be disabled separately.

## Claims

1. A mains electrical supply outlet comprising:
a socket (7), connectable, in use, to an electricity-consuming device (P), to supply mains electricity thereto; and
a connection sensor (34), to sense the connection of an electricity-consuming device to said socket and to disconnect power from a controller in the absence of such a connection; **characterised in that** the supply outlet comprises a signal-receiving means (37) to receive an encoded wireless signal; and further
**characterised in that** the supply outlet comprises a controller (38), powered by mains electricity, to decode said received encoded signal and, in response to said signal, to control switching of electrical power to said socket.

2. A supply outlet according to claim 1 wherein said connection sensor is actuated by a terminal pin of a plug connectable to said socket.

3. A supply outlet according to either claim 1 or claim 2, further comprising a manually-operable switch to disable operation of said controller.

4. A supply outlet according to any preceding claim wherein said controller compares said decoded signal to a pre-stored code held within the supply outlet and controls switching of electrical power only if a match is found between said decoded signal and said pre-stored code.

5. A supply outlet according to claim 4, further comprising means to change said pre-stored code to match a subsequently received encoded wireless signal.

6. A supply outlet according to any preceding claim, wherein the encoded wireless signal is transmitted on actuation of a manually operable remote power switch.

7. A supply outlet according to claim 6, wherein the manually operable remote power switch is located on an electrical light switch assembly.

8. A kit comprising a supply outlet, said supply outlet being in accordance with Claims 1-7, and including an electrical light switch assembly comprising:
a manually operable light switch (C) to control the supply of power to a lighting circuit; and
a manually operable remote power switch (A) to actuate the transmission of an encoded wireless signal to a mains electrical supply outlet according to any preceding claim.

9. A kit comprising a supply outlet, said supply outlet being in accordance with Claims 1-7 and including an electrical transmission assembly comprising:
a plug suitable for receiving mains electricity;
a socket suitable for conveying mains electricity received by the plug; and
a manually operable remote power switch to actuate the transmission of an encoded wireless signal to the mains electrical supply outlet.

10. A kit according to claim 8 or 9, further comprising a sound generator to give an audible indication of the transmission of said encoded wireless signal.

11. A kit according to any of claims 8, 9 or 10, further comprising a visual indicator give a visible indication of the transmission of said encoded wireless signal.

## Patentansprüche

1. Netzstrom-Einspeisungspunkt, umfassend:
eine Steckdose (7), die - im Gebrauch - mit einem Strom verbrauchenden Gerät (P) verbunden werden kann, um dieses mit Netzstrom zu versorgen; und
einen Verbindungssensor (34) zum Erkennen der Verbindung eines Strom verbrauchenden Geräts mit der Steckdose und zum Trennen des Stroms von einer Steuereinrichtung bei Abwesenheit einer solchen Verbindung; **dadurch gekennzeichnet, dass** der Einspeisungspunkt eine Signalempfangseinrichtung (37) zum Empfangen eines codierten drahtlosen Signals umfasst; und des Weiteren **dadurch gekennzeichnet, dass** der Einspeisungspunkt eine durch Netzstrom betriebene Steuereinrichtung (38) umfasst, die dem Decodieren des empfangenen kodierten Signals und - als Reaktion auf das Signal - dem Steuern des Schaltens von elektrischem Strom zu der Steckdose dient.

2. Einspeisungspunkt gemäß Anspruch 1, wobei der Verbindungssensor durch einen Kontaktstift eines mit der Steckdose verbindbaren Steckers betätigt wird.

3. Einspeisungspunkt gemäß Anspruch 1 oder Anspruch 2, des Weiteren umfassend einen manuell zu betätigenden Schalter zum Deaktivieren des Betriebs der Steuereinrichtung.

4. Einspeisungspunkt gemäß einem der vorherigen Ansprüche, wobei die Steuereinrichtung das decodierte Signal mit einem zuvor gespeicherten Code vergleicht, der in dem Einspeisungspunkt gespeichert ist, und das Schalten von elektrischem Strom nur dann steuert, wenn eine Übereinstimmung zwischen dem decodierten Signal und dem zuvor gespeicherten Code festgestellt wurde.

5. Einspeisungspunkt gemäß Anspruch 4, des Weiteren umfassend Mittel zum Ändern des zuvor gespeicherten Codes, um mit einem nachfolgend empfangenen codierten drahtlosen Signal übereinzustimmen.

6. Einspeisungspunkt gemäß einem der vorherigen Ansprüche, wobei das codierte drahtlose Signal bei Betätigung eines manuell zu betätigenden Fernbedienungs-Netzschalters gesendet wird.

7. Einspeisungspunkt gemäß Anspruch 6, wobei sich der manuell zu betätigende Fernbedienungs-Netzschalter an einer elektrischen Lichtschalterbaugruppe befindet.

8. Bausatz, umfassend einen Einspeisungspunkt, wobei der Einspeisungspunkt den Ansprüchen 1-7 entspricht, und enthaltend eine elektrische Lichtschalterbaugruppe, welche umfasst:
einen manuell zu betätigenden Lichtschalter (C) zum Steuern der Stromversorgung zu einem Beleuchtungsstromkreis; und
einen manuell zu betätigenden Fernbedienungs-Netzschalter (A) zum Auslösen des Sendens eines codierten drahtlosen Signals zu einem Netzstrom-Einspeisungspunkt gemäß einem der vorherigen Ansprüche.

9. Bausatz, umfassend einen Einspeisungspunkt, wobei der Einspeisungspunkt den Ansprüchen 1-7 entspricht, und enthaltend eine elektrische Sendebaugruppe, welche umfasst:
einen Stecker, der geeignet ist, Netzstrom zu aufzunehmen;
eine Steckdose, die geeignet ist, den von dem Stecker aufgenommenen Netzstrom zu transportieren; und
einen manuell zu betätigenden Fernbedienungs-Netzschalter zum Auslösen des Sendens eines codierten drahtlosen Signals zu dem Netzstrom-Einspeisungspunkt.

10. Bausatz gemäß Anspruch 8 oder 9, des Weiteren umfassend einen Klanggenerator zum Bereitstellen einer hörbaren Anzeige des Sendens des codierten drahtlosen Signals.

11. Bausatz gemäß Anspruch 8, 9 oder 10, des Weiteren umfassend eine optische Anzeigevorrichtung zum Bereitstellen einer sichtbaren Anzeige des Sendens des codierten drahtlosen Signals.

## Revendications

1. Une prise d'alimentation électrique secteur comprenant :
une prise femelle (7), raccordable, lors de l'utilisation, à un dispositif consommant de l'électricité (P), pour alimenter celui-ci en électricité secteur ; et
un détecteur de raccordement (34), pour détecter le raccordement d'un dispositif consommant de l'électricité à ladite prise femelle et pour déconnecter l'énergie d'un dispositif de commande en l'absence d'un raccordement de la sorte ; **caractérisée en ce que** la prise d'alimentation comprend un moyen de réception de signal (37) pour recevoir un signal sans fil codé ; et **caractérisée en outre en ce que** la prise d'alimentation comprend un dispositif de commande (38), alimenté en énergie par l'électricité secteur, pour décoder ledit signal codé reçu et, en réponse audit signal, pour commander la commutation de l'énergie électrique vers ladite prise femelle.

2. Une prise d'alimentation selon la revendication 1 dans laquelle ledit détecteur de raccordement est activé par une fiche terminale d'une prise mâle raccordable à ladite prise femelle.

3. Une prise d'alimentation selon n'importe lesquelles de la revendication 1 ou de la revendication 2, comprenant en outre un interrupteur manuel pour arrêter le fonctionnement dudit dispositif de commande.

4. Une prise d'alimentation selon n'importe quelle revendication précédente dans laquelle ledit dispositif de commande compare ledit signal décodé avec un code préenregistré contenu à l'intérieur de la prise d'alimentation et commande la commutation de l'énergie électrique seulement si une correspondance est trouvée entre ledit signal décodé et ledit code préenregistré.

5. Une prise d'alimentation selon la revendication 4, comprenant en outre un moyen pour changer ledit code préenregistré pour correspondre à un signal sans fil codé reçu subséquemment.

6. Une prise d'alimentation selon n'importe quelle revendication précédente, dans laquelle le signal sans fil codé est transmis à l'activation d'un interrupteur d'alimentation distant manuel.

7. Une prise d'alimentation selon la revendication 6, dans laquelle l'interrupteur d'alimentation distant manuel est situé sur un assemblage d'interrupteur de lumière électrique.

8. Un kit comprenant une prise d'alimentation, ladite prise d'alimentation étant conforme aux revendications 1-7, et incluant un assemblage d'interrupteur de lumière électrique comprenant :
un interrupteur de lumière manuel (C) pour commander l'alimentation en énergie vers un circuit d'éclairage ; et
un interrupteur d'alimentation distant manuel (A) pour activer la transmission d'un signal sans fil codé à une prise d'alimentation électrique secteur selon n'importe quelle revendication précédente.

9. Un kit comprenant une prise d'alimentation, ladite prise d'alimentation étant conforme aux revendications 1-7 et incluant un assemblage de transmission électrique comprenant :
une prise mâle adaptée pour recevoir de l'électricité secteur ;
une prise femelle adaptée pour acheminer l'électricité secteur reçue par la prise mâle ; et
un interrupteur d'alimentation distant manuel pour activer la transmission d'un signal sans fil codé à une prise d'alimentation électrique secteur.

10. Un kit selon la revendication 8 ou la revendication 9, comprenant en outre un générateur de son pour donner une indication audible de la transmission dudit signal sans fil codé.

11. Un kit selon n'importe lesquelles des revendications 8, 9 ou 10, comprenant en outre un indicateur visuel pour donner une indication visible de la transmission dudit signal sans fil codé.
